# EUROPEAN PATENT APPLICATION

(11) **EP 2 881 279 A1**
(43) Date of publication of application: **10.06.2015**
(21) Application number: 14195428.9
(22) Date of filing: 28.11.2014
(51) Int. Cl.: B60K 37/02, B60Q 3/00, B23K 26/38, F21V 8/00, G01D 11/28

(54) **Light-pipe cut from sheet stock for instrument panel**

(30) Priority: 06.12.2013 US 201314099010
(71) Applicant: Delphi Technologies, Inc., Troy MI 48007 (US)
(72) Inventor: Trevillian Jr, Jerry Lee, El Paso, TX 79912 (US); Witham, David, L., Grand Blanc, MI 48439 (US)
(74) Representative: Robert, Vincent

(57) **Abstract**

A vehicle (10) instrument panel assembly (12) that includes a light-pipe (40) configured to guide light emitted from a light source (28) to a location on the assembly (12) remote from the light source (28). The light-pipe (40) is advantageously cut from a sheet of light-transmissive material using a laser (62).

## Description

### TECHNICAL FIELD OF INVENTION

This disclosure generally relates to a light-pipe suitable for use in a vehicle instrument panel assembly, and more particularly relates to a light-pipe cut from a sheet of light-transmissive material.

### BACKGROUND OF INVENTION

It is known to form a light-pipe using injection molding processes. However, if a thin (<3mm) but larger area (>100sq-mm) light-pipe is needed, injection molding a part with such an aspect ratio can be difficult and expensive.

### SUMMARY OF THE INVENTION

In accordance with one embodiment, a vehicle instrument panel assembly is provided. The assembly includes a light source and a light-pipe. The light-pipe is configured to guide light emitted from the light source to a location on the assembly remote from the light source. The light-pipe is cut from a sheet of light-transmissive material.

In another embodiment, a light-pipe suitable for use in a vehicle instrument panel assembly is provided. The light-pipe is configured to guide light emitted from a light source to a location on the assembly remote from the light source. The light-pipe is cut from a sheet of light-transmissive material.

In yet another embodiment, a method of forming a light-pipe suitable for use in a vehicle instrument panel assembly is provided. The method includes the step of providing a sheet of light-transmissive material. The method also includes the step of cutting the light-pipe from the sheet.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle interior equipped with an instrument panel assembly in accordance with one embodiment;
Fig. 2 is a perspective view of the assembly of Fig. 1 in accordance with one embodiment;
Fig. 3 is an exploded perspective view of the assembly of Fig. 1 in accordance with one embodiment;
Fig. 4 is a perspective view of a light-pipe use in the assembly of Figs. 2 and 3 in accordance with one embodiment; and
Fig. 5 is a flowchart of a method of forming the light-pipe of Fig. 4 in accordance with one embodiment.

### DETAILED DESCRIPTION

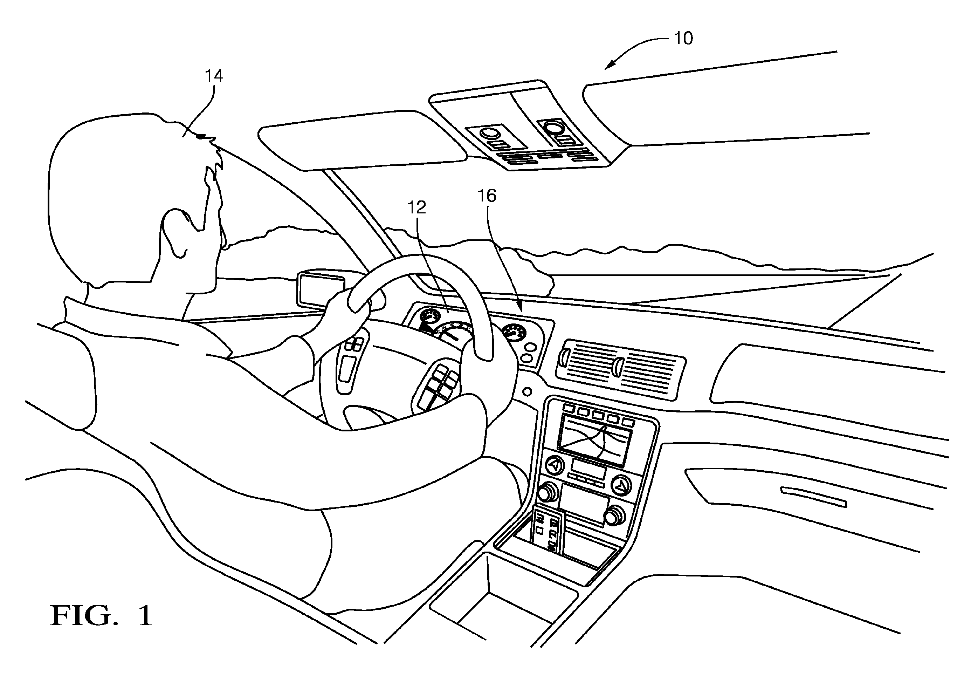

Fig. 1 illustrates a non-limiting example of a vehicle 10 equipped with an instrument panel assembly, hereafter referred to as the assembly 12, installed into a dashboard 16 of the vehicle 10. In general, the assembly 12 displays vehicle information to an operator 14 of the vehicle 10 such as engine speed, vehicle speed, engine coolant temperature, and the like.

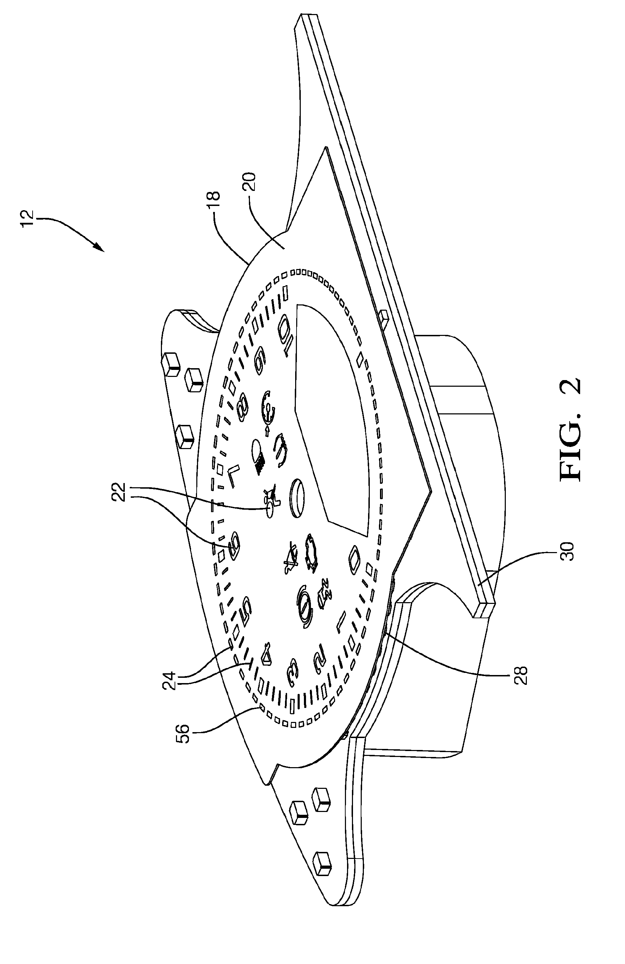

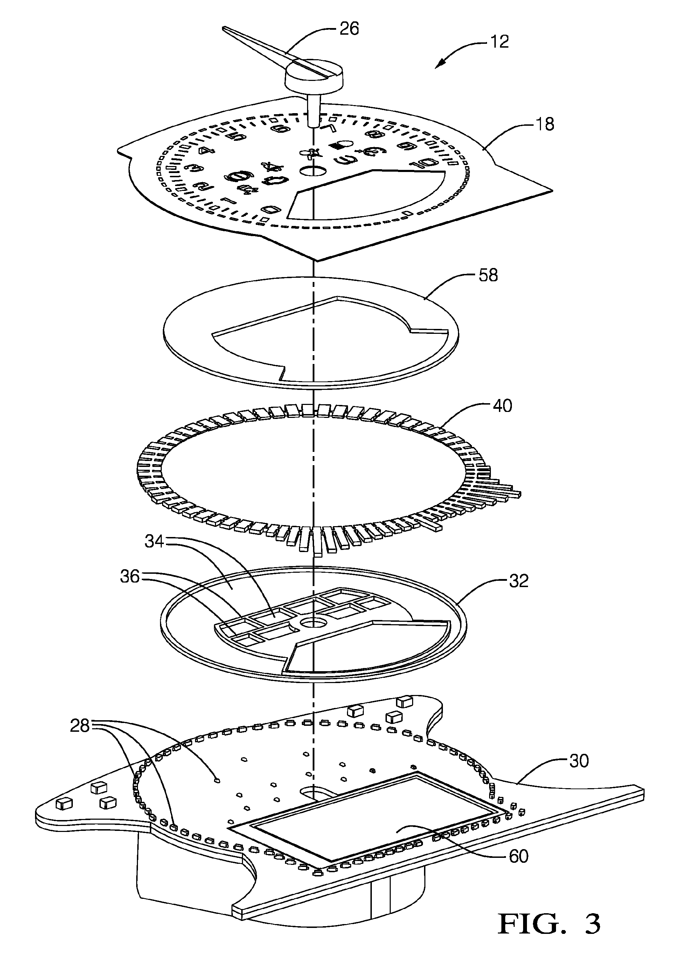

Figs. 2 and 3 illustrate a non-limiting examples or portions of the assembly 12 as it might appear when not installed into the dashboard 16 of the vehicle 10. In general, the assembly 12 includes an applique 18 that defines a display surface 20 of the assembly 12. The applique 18 typically includes graphics 22 and indicia 24 that determine the general appearance of an instrument panel (the assembly 12). Some of the graphics 22 or the indicia 24 are configured to become visibly apparent to the operator 14 only when suitably backlit. The assembly 12 may also include a pointer 26 operable to move in a manner effective to indicate to the operator 14 a graphic corresponding to a particular value of vehicle information such as engine speed.

In order to illuminate or backlight the applique 18, the assembly 12 includes a light source 28. By way of example and not limitation, the light source 28 may be a plurality of light emitting diodes (LEDs). The LEDs may be mounted onto a circuit board 30. The LED's may be operated (turned ON, turned OFF) individually to, for example, illuminate one of the graphics such as a high-beam indictor, or may be operated in groups to, for example, illuminate the numerals to which the pointer 26 points. The circuit board 30 may be formed of the well-known FR-4 circuit board material with conductor traces formed of copper foil. The LED's may be attached to the circuit board 30 by soldering, as will be recognized by those in the art. The assembly 12 may include a gasket 32 that defines openings 34 separated by barriers 36 so light emitted by an LED intended to illuminate, for example, the high-beam indicator does not 'leak' and undesirably illuminate an adjacent graphic such as a low-tire-pressure indicator.

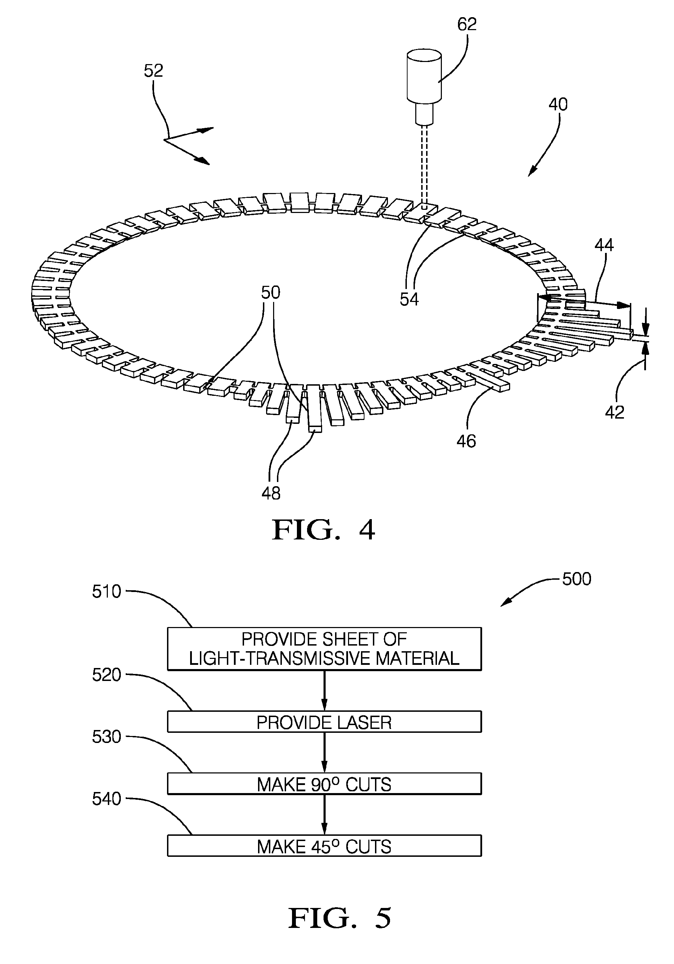

The a light-pipe 40 configured to guide light emitted from the light source 28 to a location on the assembly 12 remote from the light source 28. In general, the idea of using transparent or light-transmissive material such as a clear acrylic to form a light-pipe is known. Typically, light-pipes are formed by injection molding a light-transmissive material. However, as is the case in the example instrument panel assembly shown, the height or thickness 42 (Fig. 4) allotted by an assembly 12 for the light-pipe 40 is relatively thin, less than three millimeters (3mm) for example. Those in the injection molding arts will recognize that injection molding a light pipe with a thickness of, for example, two millimeters (2mm), and a feature length 44 of more than ten millimeters (10mm) can be difficult when cost targets for tooling, material waste, and mold cycle time are required to be relatively low.

The light-pipe 40 may be advantageously formed by cutting the light-pipe 40 from a sheet (i.e. sheet stock) of light-transmissive material. A description of how to cut a sheet of light-transmissive material is presented in a co-owned United States Patent Number 5,645,666 issued to Jones on July 8, 1997, the entire contents of which are hereby incorporated by reference herein. By way of example and not limitation, a suitable sheet material from which the light-pipe can be cut is available from PLASKOLITE Inc. of Columbus, Ohio, USA, Item # 1AG000QA in a thickness of 1.50mm. It is recognize that the sheet material may also include a coating on one or both sides of the sheet to promote propagation of light through the light-pipe 40.

Continuing to refer to Fig. 4, the light-pipe 40 preferably has a cut edge 46 that is relatively optically clear. That is, a frosted appearing or rough edge is undesirable as it is believed that excessive roughness can cause light being guided by the light pipe to more readily escape or diffuse from the light-pipe 40. Furthermore, if light is emitted into the light-pipe 40 by the light source 28 via a cut edge, excessive roughness can reduce the amount of light received by the light-pipe 40. Attempts to cut the light-pipe 40 using mechanical devices such as a router, a water-jet, or a die-stamp disadvantageously required subsequent polishing of the cut edge 46 to achieve the desired optical clarity or lack of roughness. However, it was discovered that when the light-pipe 40 is cut from the sheet by a laser 62, the finish of the cut edge is sufficiently optically clear without polishing or other further processing. Suitable lasers and supporting equipment for cutting the light pipe 40 from a sheet of light-transmissive material are commercially available from several sources. It is recognized that roughness measurements are not well standardized, but it has been suggested that the cut edge 46 should have a roughness of less than one-hundred angstroms (100Ǻ) root-mean-square (rms).

In the non-limiting example illustrated in Figs. 2 and 3, some of the LEDs that make up the light source 28 are configured to emit light into a cut edge of the light-pipe, in particular a cut end 48 (Fig. 4) of the plurality of segments 50 that form the light-pipe 40. By way of further explanation and not limitation, the sheet from which the light-pipe 40 is formed, or the light-pipe 40 itself, may be characterized as defining a plane 52 of the light-pipe 40. As such, the light source 28 may be characterized as being configured to emit light in a direction substantially parallel to the plane 52. As used herein, substantially parallel means the general intent was to be parallel to the plane 52, but within reasonable manufacturing tolerances, +/-5 degrees of angle for example.

With the LED's arranged about the perimeter of the light-pipe 40 being configured to emit light into the cut end 48 of the segments 50 that form the light-pipe, it is generally preferable for the cut end 48 to normal or perpendicular to the plane 52. That way, light propagating through the segments 50 propagates in a direction that is generally parallel to the cut edge 46 and upper and lower surface of the segments 50 so that the majority of light is reflected back toward the interior of the segment as opposed to escaping from the segment through the cut edge 46 and upper and lower surface of the segments 50.

To direct light from the light-pipe 40 toward the applique 18 to illuminate the indicia 24 of the applique 18, the end of each of the segments 50 opposite the cut end 48 may advantageously include a beveled portion 54 configure to direct light traveling through each of the segments 50 toward the applique. By way of further explanation and not limitation, the beveled portion 54 may be characterized as being at an angle substantially less than normal relative to the plane 52 defined by the sheet or the light-pipe 40. As used herein, an angle substantially less than normal includes angles from thirty degrees (30°) to sixty degrees (60°). Preferably, the angle of the beveled portion is forty-five degrees (45°) relative to the plane 52. It is recognized that 45° would generally provide for the greatest light intensity, but other angles could be used to spread the light in any of the segments 50 over a larger area of the applique 18. In this way, the size of the indicia 24 is not limited by the thickness 42 of the light-pipe.

Accordingly, the applique 18 may be configured to define a translucent section 56 that define the indicia 24 and are positioned to align with the beveled portion 54 when the assembly is assembled as shown in Fig. 2.

Referring again to Fig. 3, the assembly may include a light spreader 58 configured to distribute light from a few LEDs to a larger area of the applique. For example, the light spreader 58 may be configured to illuminate or back light the numerals to which the pointer 26 points. The assembly 12 may also include a reconfigurable display 60 such as liquid crystal display (LCD) that provides for portion for the assembly 12.

Fig. 5 illustrates a non-limiting example of a method 500 of forming a light-pipe 40 suitable for use in a vehicle instrument panel assembly (the assembly 12).

Step 510, PROVIDE SHEET OF LIGHT-TRANSMISSIVE MATERIAL, may include unrolling a sheet of light-transmissive material from a roll of the material.

Step 520, PROVIDE LASER, may include programing a laser 62 based cutting machine with the data or coordinates necessary to define the shape of the object (e.g. the light-pipe 40) that is going to be produced by cutting the sheet provided.

Step 530, MAKE 90° CUTS, may include adjusting the direction of the laser 62 to make cuts normal to the plane 52, and making the cuts in the sheet material that define the cut edge 46 and cut end 48 of the segments 50. cutting the light-pipe from the sheet.

Step 540, MAKE 45° CUTS, may include adjusting the direction of the laser 62 to make cuts at 45° to the plane 52, and making the cuts in the sheet material that define the beveled portion 54 of the segments 50.

Accordingly, a vehicle instrument panel assembly (the assembly 12), a light-pipe 40 for the assembly 12, and a method 500 of forming a light-pipe suitable for use in a vehicle instrument panel assembly is provided. By cutting the light-pipe 40 from sheet stock, the light-pipe 40 can be made thinner than is economically feasible using traditional injection molding techniques. Furthermore, by using a laser 62 to cut the light pipe from the sheet stock, the various edges (cut edge 46, cut end 48, and beveled portion 54) will have surface finishes that are advantageous for the performance of the light-pipe 40 without any additional edge polishing processes.

While this invention has been described in terms of the preferred embodiments thereof, it is not intended to be so limited, but rather only to the extent set forth in the claims that follow.

## Claims

1. A vehicle (10) instrument panel assembly (12) comprising:
a light source (28); and
a light-pipe (40) configured to guide light emitted from the light source (28) to a location on the assembly (12) remote from the light source (28), wherein the light-pipe (40) is cut from a sheet of light-transmissive material.

2. The assembly (12) in accordance with claim 1, wherein the light-pipe (40) is cut from the sheet by a laser (62).

3. The assembly (12) in accordance with claim 1 or 2, wherein the light source (28) is configured to emit light into a cut edge (46) of the light-pipe (40).

4. The assembly (12) in accordance with claim 3, wherein the sheet defines a plane (52), and the light source (28) is configure to emit light in a direction substantially parallel to the plane (52).

5. The assembly (12) in accordance with any one of claims 1 to 4, wherein the sheet defines a plane (52), and the light-pipe (40) includes a beveled portion (54) characterized as being at an angle substantially less than normal relative to the plane (52).

6. The assembly (12) in accordance with claim 5, wherein the assembly (12) includes an applique (18) arranged to overlay the light-pipe (40), and the applique (18) defines a translucent section (56) positioned to align with the beveled portion (54).

7. A light-pipe (40) suitable for use in a vehicle (10) instrument panel assembly (12), said light-pipe (40) configured to guide light emitted from a light source (28) to a location on the assembly (12) remote from the light source (28), wherein the light-pipe (40) is cut from a sheet of light-transmissive material.

8. The light-pipe (40) in accordance with claim 7, wherein the light-pipe (40) is cut from the sheet by a laser (62).

9. The light-pipe (40) in accordance with claim 7 or 8, wherein the sheet defines a plane (52), and the light-pipe (40) includes a beveled portion (54) characterized as being at an angle substantially less than normal relative to the plane (52).

10. A method (500) of forming a light-pipe (40) suitable for use in a vehicle (10) instrument panel assembly (12), said method (500) comprising:
providing (510) a sheet of light-transmissive material; and
cutting (530, 540) the light-pipe (40) from the sheet.

11. The method (500) in accordance with claim 10, wherein the method (500) includes providing (520) a laser (62), and wherein the step of cutting (530, 540) is performed by the laser (62).

12. The method (500) in accordance with claim 10 or 11, wherein the step of cutting (530, 540) includes cutting (540) a beveled portion (54) characterized as being at an angle substantially less than normal relative to a plane (52) defined by the sheet.
